(19) Europäisches Patentamt
European Patent Office
Office européen des brevets

(11) **EP 3 567 221 A1**

(12) **EUROPEAN PATENT APPLICATION**

(43) Date of publication:
**13.11.2019  Bulletin 2019/46**

(51) Int Cl.:
*F01D 11/00* (2006.01)   *F16J 15/02* (2006.01)
*F16J 15/08* (2006.01)

(21) Application number: **18171250.6**

(22) Date of filing: **08.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Narayanan, Arjun**
**560075 Bangalore, Karnataka (IN)**

• **Chaitanya, O.V.R.Krishna**
**560067 Bangalore, Karnataka (IN)**
• **Hansmann, Daniel**
**45699 Herten (DE)**
• **Nandula, Phani**
**534202 West Godavari Dist, Andhrapradesh (IN)**
• **Raben, Markus**
**45478 Mülheim an der Ruhr (DE)**
• **Zhou, Kunyuan**
**10707 Berlin (DE)**

(74) Representative: **Patentanwaltskanzlei WILHELM & BECK**
**Prinzenstraße 13**
**80639 München (DE)**

(54) **SEALING ELEMENT FOR TURBO-MACHINES**

(57)    A sealing element (250) for sealing static parts (202, 204) in a turbo machine is disclosed. The static parts (202, 204,) are separated by a cavity (205). The sealing element (250) is arrange-able in the cavity (205) and is characterized by a lattice structure. The lattice structure is one or more of a homogenous lattice structure (500, 600, 700) and a non-homogenous lattice structure (300) capable of exhibiting variable stiffness.

FIG 2

EP 3 567 221 A1

**Description**

Seals or sealing elements are used widely in turbo-machines to separate a high pressure/temperature zone and a low pressure/temperature zone. A leak from flow way of an area with a higher pressure to an area with a lower pressure is generally unwanted. For example, in gas turbine there are separate flow ways for gas and air and accordingly, separate zones are formed. Air or gas leak can lead to a reduction of the degree of effectiveness of the gas turbine so that more fuel is needed for the same performance. Specifically, gas leak in the combustion chamber area of a gas turbine can require a rise of the burning temperature to obtain the same turbine performance. This can further result in increase in pollutants, like e.g. nitric oxides and carbon monoxide.

There are several sealing elements to reduce leaks in the turbine. For example, metallic flat gaskets are used in a straight or especially formed execution, as e.g. in O form, C form or E form. Another example of sealing element is disclosed in the publication US8684673 B2 "Static seal for turbine engine". The sealing element in the publication US8684673 B2 is a nickel based alloy. However, the disclosed sealing elements lack flexibility that is required to counter misalignment between static parts that are to be sealed. Due to lack of flexibility the known sealing elements display high rates of leakage.

It is therefore an object of the invention at hand to provide a sealing element with which the mentioned disadvantages can be reduced or cleared.

The invention achieves this object in that the sealing element arrange-able in sealing cavity, characterized by a variable lattice structure capable of exhibiting variable stiffness.

According to an aspect of the present invention, the sealing element is provided between static parts of a turbo-machine.

Generally, the sealing element is found in many sections of the turbo-machine. For example, in some sections of the turbo-machine, the sealing element separates the primary flow (hot fluid) from the secondary flow (relatively colder fluid). Thus, there is a large temperature difference across the sealing element which can be on the order of 1000 deg C. Further, due to assembly constraints, such the sealing element is thin having a few millimetres in thickness. Therefore, large thermo-mechanical stresses are generated in the sealing element due to temperature gradient that is experienced by the sealing element. The sealing element as disclosed in the present invention advantageously overcomes the stress with the lattice structure that exhibits variable stiffness.

In an embodiment, the sealing element is provided in turbine vanes in a turbine engine to seal a cavity or gap formed between vane shroud segments. When there is a misalignment in the vane shroud segments, the sealing element advantageously overcomes the same by exhibiting deformation in its structure. The sealing element is capable of exhibiting high flexibility and selective deformation in view of the lattice structure.

The term lattice structure refers to a material formed with a grid-like structure. The material includes a metallic material, a metal-ceramic material, a ceramic material or a composite material or consists of a combination of the mentioned materials. The lattice structure can also be understood as net or pore structure that is arranged in multiple layers. There are several types of lattice structures such as honeycomb lattice structure, triangular lattice structure, harmonic lattice structure, bi-harmonic lattice structure, etc.

The lattice structure can be a homogenous lattice structure, a non-homogenous lattice structure or a combination of both homogenous and non-homogenous lattice structures. The homogeneity and non-homogeneity is exhibited in the width, length and thickness dimension.

According to another embodiment of the present invention, the homogenous lattice structure comprises homogenous lattice units arranged homogenously along the width, length or thickness of the lattice structure. Further, the non-homogenous lattice structure comprises non-homogenous lattice units arranged along the width, length or thickness of the lattice structure. Accordingly, the lattice structure may include homogenous lattice units in width but non-homogenous lattice units in length or thickness. This permutation and combination can be done in the dimensions width, length and thickness based on thermo-mechanical properties associated with the turbo-machine. The present invention is advantageous in view of the variability in lattice units used to form the lattice structure. The lattice structure is capable of higher flexibility as the lattice units are designed based on the thermo-mechanical properties.

According to yet another embodiment of the present invention, the lattice structure of the present invention includes different types of lattice units that are arranged to form a single lattice structure. For example, honeycomb lattice units and triangular lattice units can be combined in width, length or thickness to obtain the lattice structure of the present invention. In an exemplary embodiment, the lattice structure includes a combination of triangular lattice units and bi-harmonic lattice units arranged along the width of the lattice structure.

According to an embodiment of the present invention, the sealing element includes seal ends that are in contact with the static parts. For example in a turbo-machine, the seal ends of the sealing element are arranged to maintain contact with the vane shroud segments. The sealing element also includes a seal body between the seal ends. The seal body is aligned with the cavity between the static parts. In the turbo-machine, the seal body is aligned in the gap between the vane shroud segments. In addition, the sealing element also is provided with a sacrificial wear volume on the upper surface and a lower surface of the sealing element. In an embodiment, the sacrificial wear volume is provided where the sealing element is in contact with the static parts i.e. at the seal ends. The sacrificial wear volume can be coated as a separate layer or can be a buffer volume added to counter wear during operation of the sealing element. The present invention is advantageous as the sealing element is flexible in view of variability in the lattice units and is wear resistant in view of the sacrificial wear volume.

According to another embodiment of the present invention, the seal body comprises of a central lattice structure having low shear modulus. The central lattice structure is in a central portion of the sealing element. In an exemplary embodiment, the central lattice structure is provided in the seal body. The low shear modulus of the central lattice structure is achieved by pattern of lattice units in the central lattice structure. The lattice units in the central lattice structure are patterned to exhibit high flexibility. Therefore, the present invention is advantageous as high flexibility in the seal body enables the sealing element to maintain contact with the static parts, even in the event of misalignment of the static parts. For example, in case of misalignment of the vane shroud segments in a turbo-machine, the seal body is capable of aligning itself in the gap between the vane shroud segments.

According to yet another embodiment of the present invention, the central lattice structure is patterned as a bi-harmonic lattice structure. The bi-harmonic lattice structure includes a plurality of bi-harmonic units and a lattice wall separating each bi-harmonic unit. Each of the bi-harmonic units can be defined by a slot height, a slot width, a slot length and a fillet radius.

As used herein "bi-harmonic unit" refers to a lattice unit that displays a phenomenon known as "Chirality". A structure is said to be chiral when the structure and its mirror image cannot be super-imposed perfectly. Accordingly, the bi-harmonic units do not allow perfectly super-imposable bi-harmonic lattice structure. The advantage of the bi-harmonic lattice structure is that it is capable of reducing stresses due to thermal gradients. The bi-harmonic lattice structure includes a plurality of layers of the bi-harmonic units that are capable of "rolling" relative to each other.

According to an embodiment of the present invention, the seal ends comprise of end faces. In an embodiment, the end faces of the seal ends are patterned with one or more end recess. As used herein "end recess" refers to a relief pattern or recesses provided on the end face of the seal ends. The end recess enables deformation of the seal ends to maintain contact between the static parts and the seal ends.

According to another embodiment of the present invention, the seal ends comprise of the end lattice structure that is patterned to exhibit low flexibility. For example, the end lattice structure is patterned as a triangular lattice structure that exhibits low flexibility. Apart from the triangular lattice structure, the honeycomb lattice structure and the harmonic lattice structure exhibit low flexibility. The low flexibility is advantageous at the seal ends as contact is maintained at with the static parts.

Comparison of shear modulus different lattice structures, such as triangular lattice, harmonic lattice and honeycomb lattice, indicates that the bi-harmonic lattice structure 100 has the least shear modulus and therefore exhibits greater compliance.

For example, considering a fill density of 50%, the different lattice structures exhibited the following shear modulus relative to no lattice structure.

No lattice structure: Shear modulus is between 350-380MPa

Triangular lattice structure: Shear modulus for 60° triangle angles is between 50-80MPa

Honeycomb lattice structure: Shear modulus for 60° honeycomb angles is between 40-60MPa

Harmonic lattice structure: Shear modulus for Length to Angle (L/A) ratio = 5 is between 110-130MPa

Bi-harmonic lattice structure: Shear modulus for L/A ratio = 4 is between 5-10MPa

In case of misalignment in the static parts, in-plane shear load being applied on the sealing element. This shear deformation is largely localized in the seal body i.e. central portion of the sealing element. Thus it is desirable that the sealing have a low effective shear modulus in the seal body to accommodate large shear deformations. The bi-harmonic lattice structure identified in this invention displays such a low shear modulus and therefore is used in the seal body. Further, in the seal ends, it is desirable that the relative stiffness (as compared to the central portion) is rather high, thus forcing the majority of the deformation to occur in the central portion. For this purpose, either a stiff lattice structure such as the honeycomb, triangular, or harmonic lattice can be considered, or no lattice may be used.

According to an embodiment of the present invention, the lattice structure includes the end lattice structure and the central lattice structure . In an embodiment, the lattice structure is manufactured by subtractive manufacturing techniques such as electrical discharge machining and laser cutting techniques. In another embodiment, the lattice structure is manufactured by additive manufacturing techniques.

According to another embodiment of the present invention, the lattice structure is optimized keeping material and/or dimension related constraints in mind. The material and dimension constraints are based on thermo-mechanical properties associated with the turbo-machine. As used herein "thermo-mechanical properties" include stiffness modes, vibration modes, coefficient of thermal expansion, specific heat capacity, heat transfer coefficient of the turbo-machine.

According to an aspect of the present invention, the sealing element comprising seal ends with end faces is provided. The sealing element characterized by end recess patterned on the end faces. The end recess enables deformation of the seal ends to maintain contact between the static parts and the seal ends.

According to another aspect of the present invention, a turbo-machine is disclosed. The turbo-machine includes static parts separated by a sealing cavity. The sealing cavity defines a high pressure zone and a low pressure zone. The turbo-machine further includes the sealing element arrange-able in the sealing cavity.

According to yet another aspect of the present invention, a method of producing the sealing element is disclosed. The method includes manufacturing the aforementioned lattice structure with either subtractive manufacturing techniques or additive manufacturing techniques. The subtractive manufacturing techniques include electrical discharge machining and laser cutting techniques.

The method further includes coating a sacrificial wear volume on an upper surface and a lower surface of the sealing element. In an embodiment, the sacrificial wear volume has a high wear resistance and is coated only at contact surfaces with the static parts. For example, cobalt-chromium-tungsten-nickel alloy L605 is coated as the sacrificial wear volume at the contact surfaces. The present invention advantageous uses additive manufacturing techniques to manufacture the sealing element with multiple materials. For example, the sealing element is a high temperature alloy such as IN718 while the sacrificial wear volume is the cobalt-chromium-tungsten-nickel alloy L605.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1 is an illustration of a bi-harmonic lattice structure according to the present invention;

FIG 2 illustrates operation of a sealing element between static parts of a turbo-machine, according to the present invention;

FIG 3 is an illustration of lattice structure of the sealing element in FIG 2;

FIG 4 is an illustration of an example bi-harmonic lattice unit according to an embodiment of the present invention;

FIG 5 is an illustration of lattice wall separating lattice units of the sealing element in FIG 2;

FIG 6 is an illustration of lattice wall separating lattice units of the sealing element in FIG 2;

FIG 7 is an illustration of lattice wall separating lattice units of the sealing element in FIG 2;

FIG 8 is illustrates a sealing element with sacrificial wear volume, according to an embodiment of the present invention;

FIG 9 is an illustration of a sealing element between static parts of a turbo-machine, according to the present invention; and

FIG 10 illustrates vanes in a turbo-machine provided with the sealing element according to FIG 2 and FIG 9.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

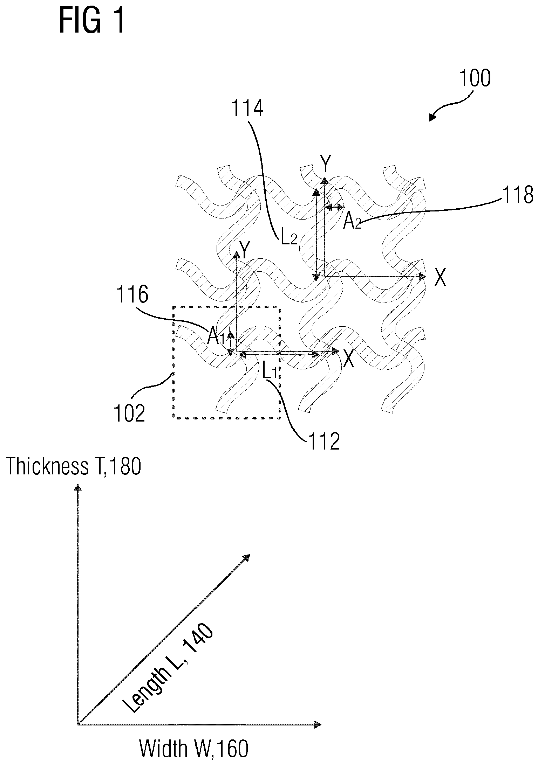

FIG 1 is an illustration of a bi-harmonic lattice structure 100 according to the present invention. The bi-harmonic lattice structure 100 is a periodic arrangement of a bi-harmonic lattice unit 102 across dimensions of length 140, width 160 and thickness 180. Parameters of the bi-harmonic lattice structure 100 include length variables i.e. $L_1$, $L_2$ indicated by reference numerals 112, 114. Other parameters of the bi-harmonic lattice structure 100 include bi-harmonic lattice unit 102 variables i.e. $A_1$, $A_2$ indicated by reference numerals 116, 118. The bi-harmonic lattice structure 100 is defined by the following equations: $y(x) = A_1 \sin(\frac{2\pi x}{L_1})$ and $x(y) = A_2 \sin(\frac{2\pi x}{L_2})$. Comparison of shear modulus different lattice structures, such as triangular lattice, harmonic lattice and honeycomb lattice, indicates that the bi-harmonic lattice structure 100 has the least shear modulus and therefore exhibits greater compliance.

For example, considering a fill density of 50%, the different lattice structures exhibited the following shear modulus relative to no lattice structure.

No lattice structure: Shear modulus is between 350-380MPa Triangular lattice structure: Shear modulus for 60° triangle angles is between 50-80MPa

Honeycomb lattice structure: Shear modulus for 60° honeycomb angles is between 40-60MPa

Harmonic lattice structure: Shear modulus for Length to Angle (L/A) ratio = 5 is between 110-130MPa

Bi-harmonic lattice structure: Shear modulus for L/A ratio = 4 is between 5-10MPa

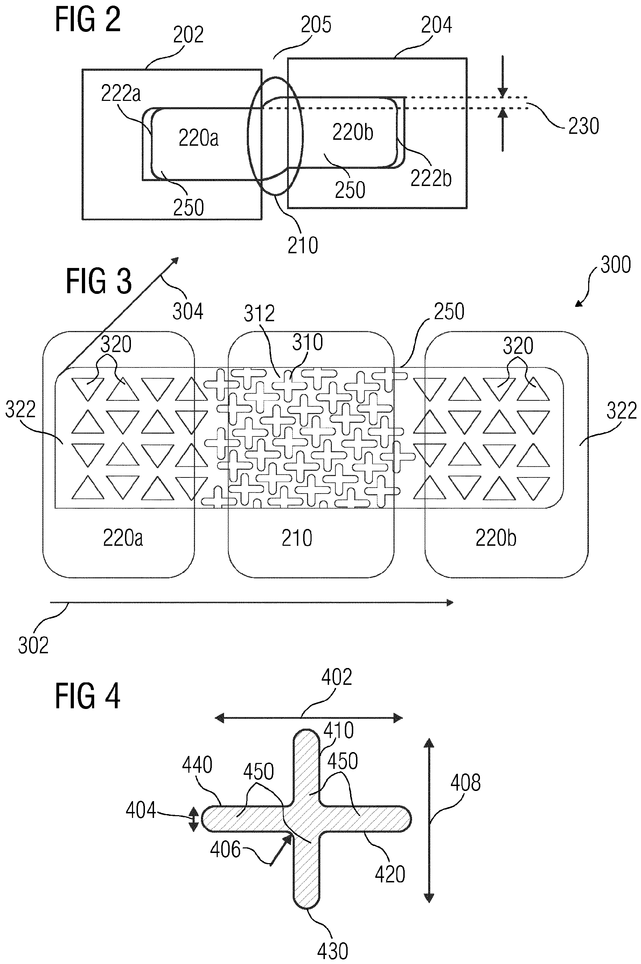

FIG 2 illustrates operation of a sealing element 250 between static parts 202 and 204 of a turbo-machine. The sealing element includes seal ends 220a and 220b arranged in contact with the static parts 202 and 204. The sealing element 250 also includes a seal body 210 between the seal ends. The seal body 210 is aligned with cavity 205 between the static parts 202 and 204.

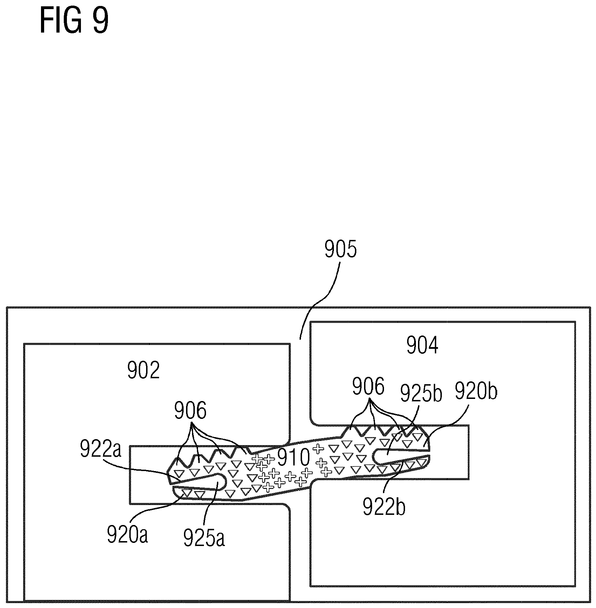

The seal ends 220a and 220b include end faces 222a and 222b. In an embodiment, the end faces 222a and 222b are patterned with one or more end recess. The end recess enables deformation of the seal ends to maintain contact between the static parts and the seal ends 220a and 220b. The operation of the end recess is elaborated in FIG 9.

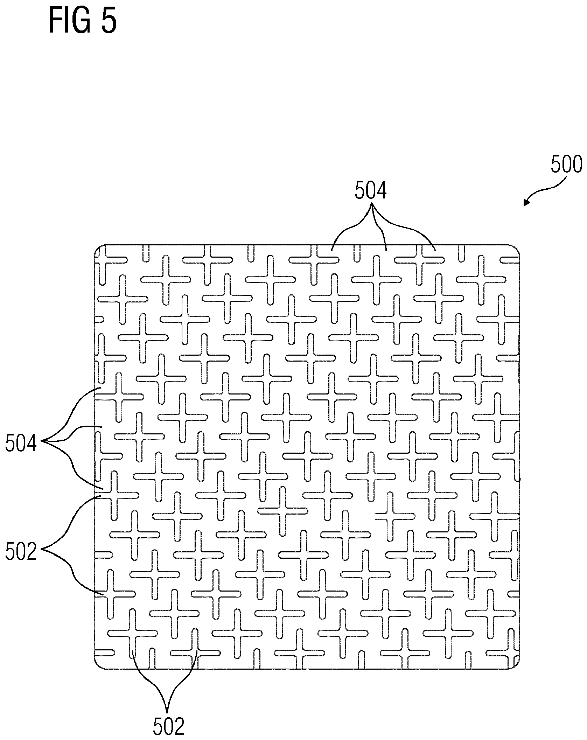

As shown in FIG 2, the seal body 210 exhibits flexibility when misalignment 230 is introduced between the static parts 202 and 204. Further, the seal ends 220a and 220b continue to maintain contact with the static parts 202 and 204 even with the misalignment 230. This variable stiffness/flexibility of the sealing element 250 is achieved by a non-homogenous lattice structure, a homogenous lattice structure or a combination of both. FIG 3 illustrates an embodiment of a non-homogenous lattice structure, while FIG 5-7 illustrate homogenous lattice structures that are parameterized to exhibit variable stiffness.

FIG 3 is an illustration of non-homogenous lattice structure of the sealing element 250 of FIG 2. As shown in FIG 3, the seal ends 220a and 220b are made using triangular lattice units 320, which are separated by lattice wall 322. The seal body 210 is made using bi-harmonic lattice units 310, which are separated by lattice wall 312. Lattice structure formed by the combination of 220a, 210 and 220b is referenced by the reference numeral 300.

As shown in FIG 3, the non-homogeneity is seen in width 302 of the sealing element 250. A person skilled in the art will appreciate that, the non-homogeneity can also be provided along length 304 of the sealing element 250. In addition, homogeneity in length 304 is provided in the sealing element 250 using the triangular lattice units 320 along the length 304 of the seal ends 220a and 220b. Further, the homogeneity is achieved by using the bi-harmonic lattice units 310 in the seal body 210 along the length 304.

FIG 4 is an illustration of an example bi-harmonic lattice unit 400. The bi-harmonic lattice unit 400 includes four arms 410, 420, 430 and 440. The arms 410-440 define a space 450 with respect to lattice wall (not shown in figure). The space 450 is defined by a slot width 404. Further, the arms 420 and 440 define length 402 of the bi-harmonic lattice unit 400 and the arms 410 and 430 define height 408 of the bi-harmonic lattice unit 400. Furthermore, the arms 410-440 are positioned at an angle to each other. The angle is referred to as fillet radius 406. The bi-harmonic lattice unit 400 is repeated to form a bi-harmonic lattice structure.

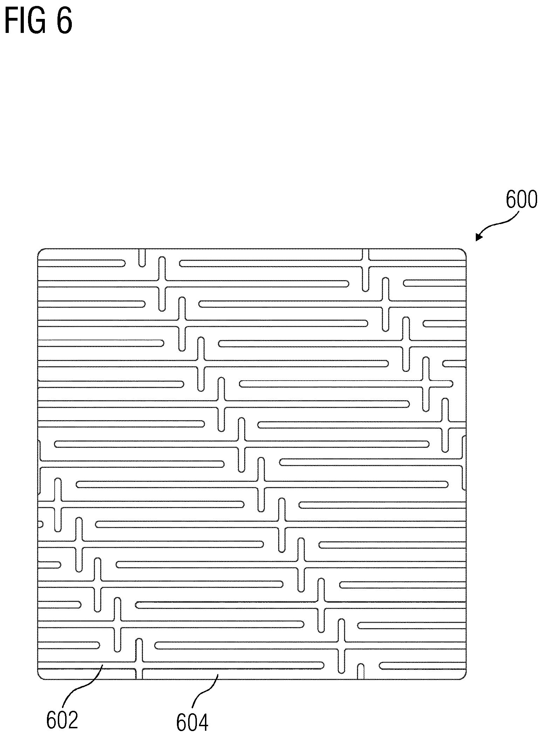

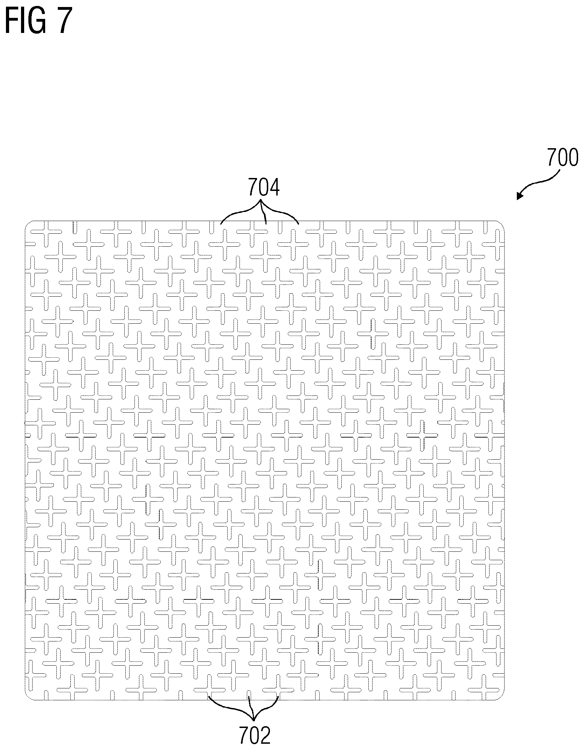

FIGs 5, 6 and 7 illustrate lattice structures 500, 600 and 700. The lattice structures 500, 600 and 700 include lattice units 502, 602 and 702. The lattice units 502, 602 and 702 are separated by lattice wall 504, 604 and 704. In FIG 5, the lattice units 502 are separated by a comparatively thicker lattice wall 504 with respect to lattice walls 604 and 704, shown in FIG 6 and 7 respectively. Accordingly, the lattice structure 500 exhibits higher stiffness as compared to lattice structures 600 and 700. As shown in FIGs 5-7, the lattice units 502, 602 and 702 are homogenous as they are bi-harmonic lattice units. Nevertheless, the lattice structures 500, 600 and 700 exhibit variable stiffness. Accordingly, a combination of the lattice units 502, 602 and 702 would result in a homogenous lattice structure with variable stiffness.

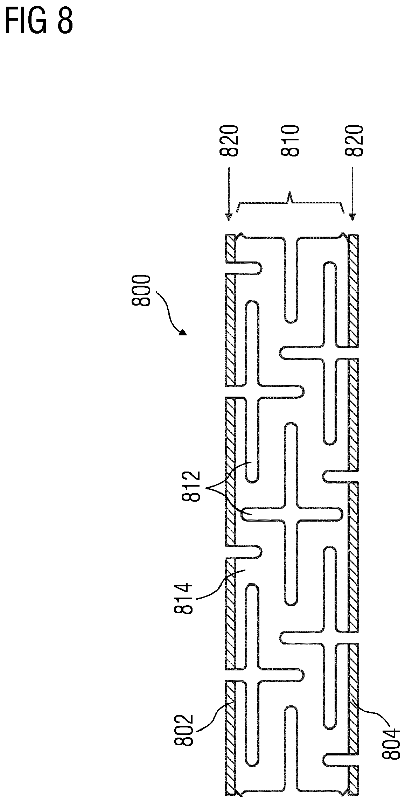

FIG 8 is illustrates a sealing element 800 with sacrificial wear volumes 820. The sealing element 800 includes a primary body 810 with lattice units 812 separated by lattice wall 814. In an embodiment, the primary body 810 is a high temperature alloy like IN718.

The primary body in FIG 8 is a homogenous lattice structure. A person skilled in the art will appreciate that the primary body 810 can be made up of non-homogenous lattice structures as indicated in FIG 3. The sacrificial wear volumes 820 have high wear resistance and are therefore provided on an upper surface 802 and a lower surface 804 of the sealing element 800. For example, cobalt-chromium-tungsten-nickel alloy L605 is coated as the sacrificial wear volumes 820.

In an embodiment, the sacrificial wear volume 820 is provided only at contact surfaces with the static parts. For example, cobalt-chromium-tungsten-nickel alloy L605 is coated only at the contact surfaces with static parts.

FIG 9 illustrates deformation of end faces 922a and 922b of a sealing element 950. As shown in FIG 9, static parts 902 and 904 are misaligned. The sealing element 950, provided in cavity 905, includes ribs 906, seal body 910 and seal ends 920a and 920b. The end faces 922a and 922b are at the extremities of the seal ends 920a and 920b. The end faces 922a and 922b include recess 925a and 925b. The recess 925a and 925b facilitate deformation of the seal ends 920a and 920b to ensure contact with the static parts 902 and 904.

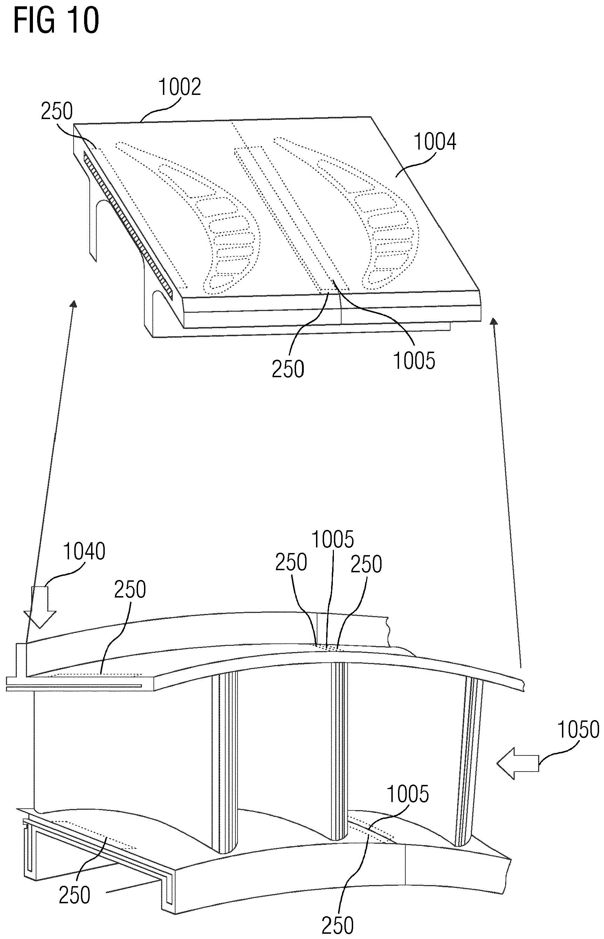

FIG 10 illustrates vanes 1002, 1004 in a turbo-machine provided with either sealing element 250 or sealing element 950. In the FIG seal 250 is used for illustration. The sealing element 250 is arrange-able such that cavity 1005 is sealed. The sealing of the cavities 1005 is important in order to separate low temperature gas 1040 from high temperature gas 1050.

It will be appreciated that the aforementioned sealing elements and lattice structures are not limited to the pattern shown in the figures, specifically FIG 3 and FIG 9. Even though the present disclosure has been described in detail with reference to specific embodiments, it will be appreciated that the various modifications and changes can be made to these embodiments without departing from the scope of the present disclosure as set forth in the claims. The specification and the drawings are to be regarded as an illustrative thought instead of merely restrictive thought.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope of the invention in its aspects.

Referenz list

FIG 1

bi-harmonic lattice structure 100
bi-harmonic lattice unit 102
length 140
width 160
thickness 180
length variables $L_1$, $L_2$ 112, 114
lattice unit variables $A_1$, $A_2$ 116, 118

FIG 2

static parts 202 and 204
cavity 205
seal body 210
seal ends 220a and 220b
end faces 222a and 222b
misalignment 230
sealing element 250

FIG 3

Non-homogenous lattice structure 300
Width 302
length 304
bi-harmonic lattice units 310
lattice wall 312
triangular lattice units 320
lattice wall 322

FIG 4

bi-harmonic lattice unit 400
length 402
slot width 404
fillet radius 406
define height 408
arms 410, 420, 430 and 440
space 450

FIG 5, FIG 6 and FIG 7

lattice structures 500, 600 and 700
lattice units 502, 602 and 702
lattice wall 504, 604 and 704

FIG 8

sealing element 800
primary body 810
lattice units 812
lattice wall 814
sacrificial wear volumes 820

FIG 9

end faces 922a and 922b
sealing element 950
static parts 902 and 904
cavity 905
ribs 906
seal ends 920a and 920b
recess 925a and 925b

FIG 10

sealing element 250
vanes 1002, 1004
cavity 1005
low temperature gas 1040
high temperature gas 1050

**Claims**

1. A sealing element (250) for sealing static parts (202, 204) in a turbo machine, wherein the static parts (202, 204, 4) are separated by a cavity (205), wherein the sealing element (250) is arrange-able in the cavity (205) and the sealing element is **characterized by** a lattice structure, wherein the lattice structure is one or more of a homogenous lattice structure (500, 600, 700) and a non-homogenous lattice structure (300) capable of exhibiting variable stiffness.

2. The sealing element (250) according to claim 1, wherein the homogenous lattice structure comprises homogenous lattice units in one of width, length and thickness of the lattice structure.

**3.** The sealing element (250) according to claim 1, wherein the non-homogenous lattice structure comprises of non-homogenous lattice units in one of width, length and thickness of the lattice structure.

**4.** The sealing element (250) according to claim 1, comprising:

seal ends (220a, 220b)arranged in contact with the static parts;
a seal body (210) between the seal ends, wherein the seal body (210) is aligned with the cavity (205) between the static parts; and
a sacrificial wear volume (820) provided on an upper surface and a lower surface of the sealing element.

**5.** The sealing element (250) according to claim 4, wherein the seal body (210) comprises of a central lattice structure having low shear modulus, wherein the central lattice structure is patterned to exhibit flexibility.

**6.** The sealing element (250) according to claim 5, wherein the central lattice structure is patterned as a bi-harmonic lattice structure comprising a plurality of bi-harmonic units (310) and a lattice wall (320) separating each bi-harmonic unit, wherein each bi-harmonic unit comprises a slot height, a slot width, a slot length and a fillet radius.

**7.** The sealing element (250) according to claim 4, wherein the seal ends (220a, 220b) comprises end faces (222a, 222b,) and an end lattice structure.

**8.** The sealing element (250) according to claim 7, wherein the end lattice structure is patterned as one or more of a triangular lattice structure (320, 322), a honeycomb lattice structure and a harmonic lattice structure.

**9.** The sealing element (950) according to claim 7, wherein the end faces of the seal ends (920a, 920b) are patterned with at least one end recess, wherein the at least one end recess (925a, 925b) enables deformation of the seal ends (920a, 920b) to maintain contact between the static parts (902, 904) and the seal ends.

**10.** The sealing element (250, 950) according to claims 1 to 9, wherein the lattice structure comprises the end lattice structure and the central lattice structure, produced by means of one or more subtractive manufacturing techniques and an additive manufacturing technique.

**11.** The sealing element (250, 950) according to claim 1, wherein the lattice structure is optimized in one of material and/or dimension based on thermo-mechanical properties associated with the turbo-machine, wherein the thermo-mechanical properties include stiffness modes, vibration modes, coefficient of thermal expansion, specific heat capacity, heat transfer coefficient of the turbo-machine.

**12.** A turbo-machine comprising:
static parts (1002, 1004) separated by a cavity, wherein the cavity (1005) defines one of a high pressure zone and a low pressure zone and a high temperature zone and a low temperature zone, the turbo-machine **characterized by** a sealing element (250) as claimed in claims 1 to 11, wherein the sealing element (250) arrange-able in the cavity (1005).

**13.** A method for manufacturing a sealing element (250) between static parts (202, 204) of a turbo-machine, the method comprising:

producing the sealing element (250) with a lattice structure according to claims 1 to 11, via one or more of a subtractive manufacturing techniques and an additive manufacturing technique; and
providing a sacrificial wear volume (820) on the sealing element (250) as claimed in claims 1 to 11, wherein the sacrificial wear volume (820) is provided on an upper surface and a lower surface of the sealing element (250).

# FIG 1

Thickness T,180

Width W,160

Length L, 140

FIG 2

202  205  204

222a

220a  220b

250  222b

250

230

210

FIG 3

300

304  312  250

320  310  320

322  322

220a  210  220b

302

FIG 4

402

410

440  450  450

404

406  420

430

408

FIG 5

FIG 6

FIG 7

704

700

702

FIG 8

# FIG 9

# FIG 10

Europäisches
Patentamt

European
Patent Office

Office européen
des brevets

# EUROPEAN SEARCH REPORT

**Application Number**

EP 18 17 1250

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/028713 A1 (GIRI SHEO NARAIN [IN] ET AL) 31 January 2013 (2013-01-31)<br>* paragraphs [0040] - [0042], [0058] - [0061], [0094] *<br>* figures 1-12,18-27 *<br>----- | 1-13 | INV.<br>F01D11/00<br>F16J15/02<br>F16J15/08 |
| X | US 2012/292862 A1 (MOEHRLE FRANK [US] ET AL) 22 November 2012 (2012-11-22)<br><br>* paragraphs [0024] - [0026], [0034] - [0035] *<br>* figures 2-5,13,14 *<br>----- | 1,2,4,5,<br>7-9,<br>11-13 | |
| X | US 2012/328419 A1 (RIGGI JR VINCENT T [US] ET AL) 27 December 2012 (2012-12-27)<br><br>* paragraphs [0045], [0049], [0056] *<br>* figures 1-9 *<br>----- | 1,2,4,5,<br>7,8,<br>10-13 | |
| X | US 2016/017999 A1 (BOYD MATT [US] ET AL) 21 January 2016 (2016-01-21)<br>* paragraphs [0061] - [0063] *<br>* figures 1-2 *<br>----- | 1-8,10,<br>13 | TECHNICAL FIELDS SEARCHED (IPC)<br><br>F01D<br>F16J |

The present search report has been drawn up for all claims

| Place of search | Date of completion of the search | Examiner |
|---|---|---|
| The Hague | 22 October 2018 | Van Wel, Oscar |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 1250

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2018

| Patent document cited in search report | | Publication date | Patent family member(s) | | Publication date |
|---|---|---|---|---|---|
| US 2013028713 | A1 | 31-01-2013 | CN | 102900473 A | 30-01-2013 |
| | | | EP | 2551562 A2 | 30-01-2013 |
| | | | US | 2013028713 A1 | 31-01-2013 |
| US 2012292862 | A1 | 22-11-2012 | CN | 103688090 A | 26-03-2014 |
| | | | EP | 2710284 A1 | 26-03-2014 |
| | | | KR | 20140012179 A | 29-01-2014 |
| | | | US | 2012292862 A1 | 22-11-2012 |
| | | | WO | 2012161920 A1 | 29-11-2012 |
| US 2012328419 | A1 | 27-12-2012 | EP | 2724058 A1 | 30-04-2014 |
| | | | US | 2012328419 A1 | 27-12-2012 |
| | | | WO | 2013003311 A1 | 03-01-2013 |
| US 2016017999 | A1 | 21-01-2016 | CA | 2955598 A1 | 21-01-2016 |
| | | | EP | 3172466 A1 | 31-05-2017 |
| | | | US | 2016017999 A1 | 21-01-2016 |
| | | | WO | 2016011395 A1 | 21-01-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8684673 B2